Europäisches Patentamt

European Patent Office

Office européen des brevets

(11) Veröffentlichungsnummer: **0 266 478 B1**

(12) **EUROPÄISCHE PATENTSCHRIFT**

(45) Veröffentlichungstag der Patentschrift: **15.05.91**

(21) Anmeldenummer: **87102809.8**

(22) Anmeldetag: **27.02.87**

(51) Int. Cl.⁵: **B23P 19/06, B25B 23/14, //G05D17/00**

(54) **Steuerungs- und Überwachungsanordnung für ein Werkzeug.**

(30) Priorität: **03.11.86 DE 3637236**

(43) Veröffentlichungstag der Anmeldung: **11.05.88 Patentblatt 88/19**

(45) Bekanntmachung des Hinweises auf die Patenterteilung: **15.05.91 Patentblatt 91/20**

(84) Benannte Vertragsstaaten: **AT BE CH DE ES FR GB IT LI LU NL SE**

(56) Entgegenhaltungen:
**DE-A- 3 234 345
DE-A- 3 324 333
US-A- 4 397 196**

(73) Patentinhaber: **Stabil Elektronik GmbH Martinstrasse 39 W-7300 Esslingen(DE)**

(72) Erfinder: **Majic, Milivoj Haubersbronnerstrasse 28 W-7068 Urbach(DE)**

(74) Vertreter: **Strasser, Wolfgang, Dipl.-Phys et al Patentanwälte Strohschänk, Uri & Strasser Innere Wiener Strasse 8 W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Steuerungs- und Überwachungsanordnung der im Oberbegriff des Anspruches 1 genannten Art. Eine solche Anordnung wird zum Beispiel in der DE-A-3324333 beschrieben.

Bei der industriellen Serienfertigung wird eine Vielzahl von sich ständig wiederholenden Montagevorgängen, z.B. das Festdrehen von Schrauben oder Muttern, mit Hilfe von hand- oder motorgetriebenen Werkzeugen durchgeführt, wobei es darauf ankommt, daß bestimmte Montageparameter, z.B. das Drehmoment und/oder der Drehwinkel, mit dem eine Schraube oder Mutter festgezogen wird, jeweils innerhalb vorgebbarer Toleranzgrenzen mit ebenfalls vorgebbaren Sollwerten übereinstimmen.

Bei der folgenden Erfindungsbeschreibung werden nur Montagevorgänge betrachtet, die hinsichtlich des rein äußeren Ablaufes gleich sind, d.h., die immer mit ein und derselben Art von Werkzeug durchgeführt werden können; dennoch werden diese Montagevorgänge dann als voneinander verschieden bezeichnet, wenn die Sollwerte für einen oder mehrere der relevanten Montageparameter und/oder die Toleranzgrenzen, innerhalb derer diese Sollwerte erreicht werden müssen, voneinander verschieden sind. Soll z.B. eine Schraube mit einem Drehmoment von 1 mkg ± 10 %, eine andere Schraube mit einem Drehmoment von 1,5 mkg ± 10 % und eine dritte Schraube mit einem Drehmoment von 1,5 mkg ± 5 % festgezogen werden, so handelt es sich im vorliegenden Zusammenhang um drei voneinander verschiedene Montagevorgänge, obwohl sie mit ein und demselben Schraubendreher durchgeführt werden können.

Es sind sogenannte "intelligente" Werkzeuge bekannt, die einerseits zur Erzielung eines vorgebbaren Sollwertes für wenigstens einen Montageparameter steuerbar sind, wobei dieser vorgebbare Sollwert für jeden einzelnen Montagevorgang ein anderer sein kann, und die andererseits Sensoren umfassen, mit deren Hilfe der tatsächlich erzielte Istwert für den wenigstens einen Montageparameter erfaßt und in ein entsprechendes Istwert-Signal umgesetzt wird. So kann z.B. ein "intelligenter" Schraubendreher oder Mutternschlüssel so aufgebaut sein, daß er das Festziehen der Schraube bzw. der Mutter automatisch beendet, wenn ein vorgebbares Soll-Drehmoment erreicht ist. Dabei ist der Wert bzw. die Größe dieses Soll-Drehmoments veränderbar und wird von einer Kontrolleinheit her vorgegeben, mit der das Werkzeug über ein Kabel oder drahtlos in Verbindung steht. Nach jedem durchgeführten Montagevorgang wird der von den Sensoren ermittelte Istwert an die Kontrolleinheit übertragen, die überprüft, ob er mit dem vorgegebenen Sollwert innerhalb der zugehörigen ebenfalls vorgebbaren Toleranzgrenzen übereinstimmt. Ist eine Übereinstimmung innerhalb der Toleranzgrenzen gegeben, so wird der Montagevorgang als "gut" beurteilt und das Werkstück für den nächsten Montagevorgang oder Montageschritt freigegeben. Wird einer der Sollwerte nicht innerhalb der vorgegebenen Toleranzgrenzen erreicht, so wird das Werkstück im allgemeinen aus der Fertigungsstrecke ausgeschleust und einer Nachbesserung zugeführt.

Es ist durchaus möglich, mit einem "intelligenten" Werkzeug der eben geschilderten Art der Reihe nach eine Vielzahl von verschiedenen Montagevorgängen auszuführen, d.h. von Montagevorgängen, bei denen im extremsten Fall jedesmal andere Sollwerte und/oder andere Toleranzgrenzen für einen oder mehrere Montageparameter vorgegeben werden. Voraussetzung ist hierfür allerdings, daß diese verschiedenen Montagevorgänge immer in der gleichen einmal vorgegebenen Reihenfolge ausgeführt werden, da die Kontrolleinheit die Sollwerte und/oder Toleranzgrenzen für jeden Montagevorgang gemäß einem festen Programm abruft. Die Bedienungsperson eines solchen Werkzeuges muß die durch das Programm festgelegte Reihenfolge kennen und genau einhalten, weil es sonst zu Montagefehlern kommt, die überdies von der Kontrolleinheit nicht erkannt werden können, da dieser ja keine Informationen darüber vorliegen, daß ein falscher Sollwert vorgegeben wurde. In einem solchen Fall würde die Kontrolleinheit lediglich die Übereinstimmung der erreichten Istwerte mit den vorgegebenen Sollwerten innerhalb der vorgegebenen Toleranzgrenzen feststellen und den oder die betreffenden Montagevorgänge fälschlicherweise als "gut" kennzeichnen.

Häufig werden in einer Fertigungsstrecke mehrere gleiche oder gleichartige Werkzeuge eingesetzt, die aber im allgemeinen im oben definierten Sinn verschiedene Montagevorgänge durchzuführen haben. Faßt man die Kontrolleinheiten dieser "intelligenten" Werkzeuge zu einer Kontrollzentrale zusammen, so muß diese Zentrale im allgemeinen an die verschiedenen Werkzeuge verschiedene Sollwerte vorgeben und die von den verschiedenen Werkzeugen gelieferten Istwerte mit dem jeweils richtigen Sollwert vergleichen und/oder die Einhaltung unterschiedlicher Toleranzgrenzen überwachen. Solange jedes der Werkzeuge, wie dies nach dem Stand der Technik üblich ist, immer für den gleichen Montagevorgang oder für die gleiche Sequenz von Montagevorgängen verwendet wird, ergeben sich hierbei keine Probleme, weil jedem Werkzeug in eindeutiger und gleichbleibender Weise ein vorgebbarer Sollwert bzw. Sollwertsatz und vorgebbare Toleranzgrenzen bzw. eine vorgebbare Folge solcher Sollwerte und Toleranzgrenzen zugeordnet werden können. Unabhängig davon, ob mehrere Kontrolleinheiten zu einer Zentrale zusammengefaßt sind oder ob jedes Werkzeug mit einer individuellen Kontrolleinheit verbunden bzw. ausgestattet ist, kann bei einer solchen dem Stand der Technik entsprechenden Steuerungs- und Überwachungsanordnung ein Werkzeug immer nur für ein und denselben Montagevorgang bzw. ein und dieselbe, genau einzuhaltende Folge von Montagevorgängen verwendet werden, wenn die Bedienungsperson nicht eine ständige Änderung des oder der Sollwerte und/oder der Toleranzgrenzen für die Montageparameter vornehmen soll, was in der Praxis einer industriellen Serienfertigung nicht durchführbar ist.

Andererseits ist es aber wünschenswert, ein und dasselbe "intelligente" Werkzeug für verschiedene Montagevorgänge in beliebiger Reihenfolge einsetzen zu können; dies ist z.B. für Nachbesserungen an den Werkstücken erforderlich, die aus der Fertigungsstrecke an verschiedenen Stellen ausgeschleust werden, weil die Istwerte des jeweiligen Montagevorganges mit den betreffenden Sollwerten nicht innerhalb der zugehörigen Toleranzgrenzen übereinstimmen. Bisher werden für solche ständig wechselnden Nachbesserungs-Montagevorgänge nur einfache Werkzeuge verwendet, die eine Überwachung der mit ihnen erreichten Montageparameter nicht zulassen.

Demgegenüber liegt der Erfindung die Aufgabe zugrunde, eine Steuerungs- und Überwachungsanordnung der eingangs genannten Art so weiterzubilden, daß mit Hilfe eines "intelligenten" Werkzeuges verschiedene Montagevorgänge in beliebiger Reihenfolge durchgeführt werden können, ohne daß die Bedienungsperson hierbei irgendwelche Änderungen am Überwachungssystem vornehmen oder neue Daten eingeben muß.

Zur Lösung dieser Aufgabe sieht die Erfindung die im Anspruch 1 niedergelegten Merkmale vor.

Durch diese Maßnahmen ist es möglich, daß eine Bedienungsperson mit ein und demselben Werkzeug in beliebiger Reihenfolge an verschiedenen Montagestellen arbeitet, an denen jeweils voneinander verschiedene Montagevorgänge durchgeführt werden müssen, wobei an ein und derselben Montagestelle immer der gleiche Montagevorgang wiederholt wird. Der oder die Sollwerte und Toleranzgrenzen für den oder die Montageparameter eines Montagevorgangs sind mit der Montagestelle verknüpft, an der der jeweilige Montagevorgang durchgeführt werden soll. Da sämtliche in Frage kommenden Sollwerte und Toleranzgrenzen in der Kontrolleinheit gespeichert sind, genügt es, daß die Erkennungseinrichtung dann, wenn die Bedienungsperson das Werkzeug in den Raumbereich einer Montagestelle bringt, ein Erkennungssignal erzeugt und an die Kontrolleinheit weitergibt, das eine eindeutige Zuordnung zwischen dem Werkzeug und der Einsatz-Montagestelle herstellt, d.h. der Montagestelle, an der das Werkzeug momentan zum Einsatz kommen soll. Die Kontrolleinheit kann dann anhand des Erkennungssignals den oder die momentan für den aktuellen Montagevorgang zu verwendenden Sollwerte und Toleranzgrenzen auswählen, dem Werkzeug vor Beginn des Montagevorgangs den oder die richtigen Sollwerte vorgeben und nach Durchführung des Montagevorgangs den oder die Sollwerte und die Toleranzgrenzen zur Beurteilung der vom Werkzeug gelieferten Istwerte heranziehen.

Erfindungsgemäß kann dieses Prinzip auch dann angewendet werden, wenn die Kontrolleinheiten mehrerer Werkzeuge zu einer Kontrollzentrale zusammengefaßt sind. Wesentlich ist lediglich, daß das Erkennungssignal immer eine eindeutige Zuordnung von Einsatz-Montagestelle ( = Vorgabe der erforderlichen Sollwerte und Toleranzgrenzen) und dem dort verwendeten Werkzeug ( = Lieferant der Istwerte) ermöglicht.

Eine bevorzugte Realisierungsmöglichkeit für eine Erkennungseinrichtung, die im Rahmen einer erfindungsgemäßen Steuerungs-und Überwachungsanordnung zum Einsatz kommen kann, besteht darin, daß für jede Montagestelle ein Sender vorgesehen ist, der ein die Montagestelle kennzeichnendes und von anderen Montagestellen unterscheidendes Signal so aussendet, daß es von einem am Werkzeug angebrachten Empfänger nur dann empfangen wird, wenn das Werkzeug zur Durchführung des betreffenden Montagevorganges in die unmittelbare Nähe der Montagestelle gebracht wird, wo der Empfänger zwangsläufig in die vom Sender abgestrahlte "Informationsdusche" eintaucht. Damit liegt zunächst beim Werkzeug eine Information darüber vor, an welcher Montagestelle es momentan zum Einsatz kommt. Diese Information wird an die Kontrolleinheit bzw. die Kontrollzentrale weitergegeben, die dann den oder die relevanten Sollwerte und Toleranzgrenzen zur Ansteuerung des Werkzeugs und zum Vergleich mit den von dem betreffenden Werkzeug gelieferten Istwerten heranziehen kann.

Kommen mehrere Werkzeuge zum variablen Einsatz, von denen jedes über einen eigenen Übertragungskanal, z.B. eine Verbindungsleitung, sowohl die Sollwert-Vorgabe erhält als auch das Erkennungssignal und die Istwerte an die Kontrollzentrale weitergibt, so ist die erforderliche Zuordnung der Steuersignale für die Werkzeuge und der Erkennungssignale, die die Information über die jeweilige momentane Einsatz-Montagestelle enthalten, und dem Werkzeug, das eine Sollwert-Vorgabe benötigt und die gemessenen Istwerte liefert, bereits durch diesen gesonderten Übertragungskanal gewährleistet. Eine andere Möglichkeit besteht darin, zu dem Erkennungssignal, das die Einsatz-Montagestelle kennzeichnet, noch ein Informationssignal hinzuzufügen, welches das Werkzeug, das dieses Erkennungssignal an die Kontrollzentrale weiterleitet, von allen anderen Werkzeugen unterscheidet.

Eine andere Möglichkeit, eine erfindungsgemäß zu verwendende Erkennungseinrichtung zu realisieren, besteht darin, daß jede Montagestelle über einen Sensor verfügt, der dann, wenn er das Eindringen eines Werkzeuges in den unmittelbaren Umgebungsbereich der Montagestelle registriert, ein entsprechendes Erkennungssignal erzeugt. Dabei ist es nicht unbedingt erforderlich, daß das Werkzeug einen aktiven Sender trägt. Statt dessen ist es möglich, daß die Annäherung des Werkzeuges an eine Montagestelle z.B ein von einem dort angeordneten Sensor erzeugtes Feld so verändert, daß diese Veränderung vom Sensor eindeutig wahrgenommen werden kann. Das vom Sensor jeweils erzeugte Erkennungssignal wird auch in diesen Fällen an die Kontrolleinheit weitergegeben, wobei z.B. durch die Verwendung voneinander getrennter Übertragungskanäle die Zuordnung zwischen Einsatz-Montagestelle und Werkzeug hergestellt werden kann. Kommen mehrere Werkzeuge zur Verwendung, die von einer gemeinsamen Kontrollzentrale überwacht werden, ist auch hier eine eindeutige Identifizierung des jeweils an einer Montagestelle zum Einsatz kommenden Werkzeuges erforderlich, was z.B. dadurch realisiert werden kann, daß jedes Werkzeug einen eigenen Sender mit eng begrenzter Reichweite trägt, der ein nur vom Empfänger der jeweiligen Einsatz-Montagestelle empfangbares Signal abstrahlt, das das zugehörige Werkzeug von allen anderen Werkzeugen unterscheidet.

Im allgemeinen sind an oder in einer Fertigungsstrecke eine Vielzahl von Montagestationen vorgesehen, an denen das Werkstück, an dem die Montagevorgänge durchgeführt werden sollen, jeweils für eine bestimmte Zeitspanne in einer definierten Lage verweilt, um dann zur nächsten Montagestation weitertransportiert zu werden. Solange sich das Werkstück in einer Montagestation befindet, kann vorgesehen sein, daß an einer oder mehreren Montagestellen, d.h. an einer oder mehreren Stellen am Werkstück selbst, jeweils immer die gleiche oder verschiedene Montageaufgaben erledigt werden. Soll in einer Montagestation nur an einer Montagestelle des Werkstücks eine Montageaufgabe oder an mehreren Montagestellen immer die gleiche Montageaufgabe erledigt werden, so genügt es gemäß der Erfindung, immer eine eindeutige Zuordnung zwischen dem Werkzeug, das in beliebiger Reihenfolge an verschiedenen Montagestationen eingesetzt werden kann, und der jeweiligen Einsatz-Montagestation herzustellen. In einem solchen Fall kann der Begriff "Montagestation" anstelle des Begriffs "Montagestelle" in den Patentansprüchen und dervorausgehenden Beschreibung treten. Für den bevorzugten Fall, daß die Erkennungseinrichtung einen die Montagestelle kennzeichnenden Sender und einen am Werkzeug vorgesehenen Empfänger umfaßt, bedeutet dies, daß an einer Montagestation jeweils ein Sender vorgesehen ist, der ein auf den Umgebungsbereich der Montagestation begrenztes Signal aussendet. Im Bereich einer so identifizierten Montagestation kann dann entweder nur eine einzige Art von Montageaufgaben gegebenenfalls an mehreren Montagestellen oder mehrere verschiedene Montageaufgaben in einer genau vorgegebenen Reihenfolge ausgeführt werden.Hier ist nur der freie Wechsel des Werkzeuges von Montagestation zu Montagestation in beliebiger Reihenfolge möglich.

Demgegenüber kann aber die erfindungsgemäße Anordnung auch so ausgebildet werden, daß an einer einzigen Montagestation mehrere voneinander verschiedene Montageaufgaben in beliebiger Reihenfolge gelöst, d.h. verschiedene Montagevorgänge mit unterschiedlichen Sollwerten und/oder Toleranzgrenzen an verschiedenen Montagestellen ohne Bindung an ein fest vorgegebenes Programm durchgeführt werden können. Für den Fall, daß die Erkennungseinrichtung einen die jeweilige Montagestelle kennzeichnenden Sender und einen am Werkzeug angeordneten Empfänger umfaßt, bedeutet dies beispielsweise, daß an einer Montagestation mehrere Sender vorgesehen sind, von denen jeder in einen genau begrenzten Raumbereich hinein ein Signal abstrahlt. Auch hier kann ein Sender den Raumbereich mehrerer Montagestellen am Werkstück abdecken, an denen dann aber immer die gleiche Montageaufgabe oder verschiedene Montageaufgaben in fest vorgegebener Reihenfolge erledigt werden müssen.

Vorteilhafte Weiterbildungen der erfindungsgemäßen Steuerungs-und Überwachungsanordnung sind in den Unteransprüchen niedergelegt.

Die Erfindung wird im folgenden anhand eines Ausführungsbeispiels unter Bezugnahme auf die Zeichnung näher beschrieben; in dieser zeigt:

Fig. 1    eine schematische Darstellung einer erfindungsgemäßen Steuerungs- und Überwachungsanordnung, und

Fig. 2    ein schematisiertes Blockschaltbild der in der Steuerungs- und Überwachungsanordnung nach Fig. 1 zur Verwendung kommenden Kontrolleinheit.

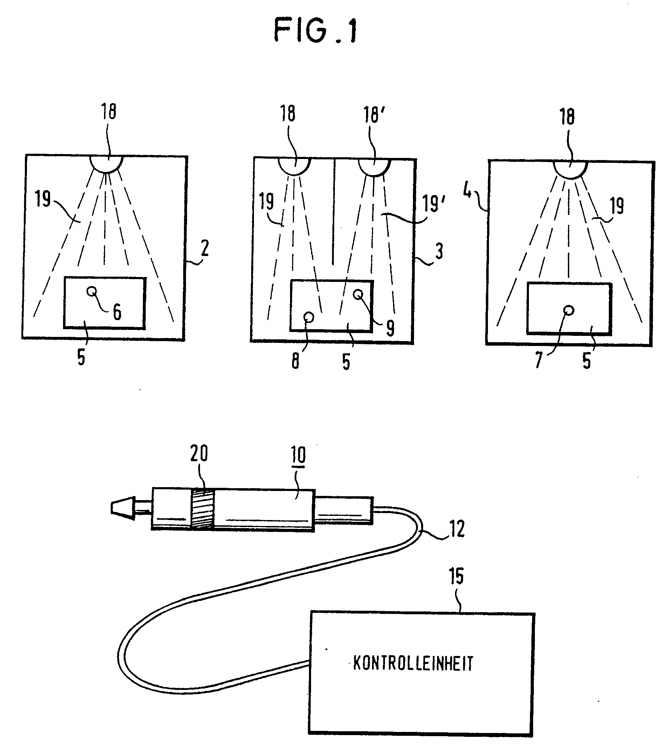

In Fig. 1 sind drei Montagestationen 2, 3, 4 wiedergegeben, in denen sich jeweils ein durch ein Rechteck symbolisiertes Werkstück 5 befindet, an dem im Fall der Montagestationen 2 und 4 jeweils eine Montageaufgabe an einer Montagestelle 6 bzw. 7 und im Fall der Montagestation 3 zwei verschiedene Montageaufgaben an den beiden Montagestellen 8 und 9 durchgeführt werden sollen; beispielsweise soll an jeder der Montagestellen eine zuvor nur leicht eingedrehte Schraube festgezogen werden. Diese Montageaufgaben sind alle voneinander verschieden, was in Fig. 1 auch dadurch zum Ausdruck kommt, daß die jeweils durch einen Kreis wiedergegebenen Montagestellen 6, 7, 8, 9, die z.B. aus einem Gewindeloch bestehen, in dem die zu montierende Schraube festgezogen werden soll, sich in jeder Montagestation 2, 3, 4 an einer anderen Stelle des Werkstücks 5 befinden. Der entscheidende Unterschied zwischen den hier angenommenen Montageaufgaben liegt aber nicht nur in der unterschiedlichen geometrischen Anordnung der Montagestellen 6, 7, 8, 9, sondern vor allem darin, daß die Schrauben an den verschiedenen Montagestellen mit unterschiedlichen Montageparametern festgezogen werden sollen. Beispielsweise soll die in der Montagestation 2 an der Montagestelle 6 festzuziehende Schraube mit einem Drehmoment von 1,5 mkg ± 5 %, die in der Montagestation 3 an den Montagestellen 8, 9 festzuziehenden Schrauben mit einem Drehmoment von 2 mkg ± 5 % bzw. einem Drehmoment von 2 mkg ± 10 % und die in der Montagestation 4 an der Montagestelle 7 festzuziehende Schraube mit einem Drehmoment von 1,0 mkg ± 10 % festgezogen werden.

Alle diese verschiedenen Montagevorgänge sollen mit ein und demselben Werkzeug 10 durchgeführt werden, das im vorliegenden Fall von einem beispielsweise durch Preßluft angetriebenen (dieser Motorantrieb ist nicht dargestellt) ansonsten aber von Hand betätigbaren Schraubendreher gebildet wird. Das Werkzeug 10 ist einerseits durch eine Kontrolleinheit 15, mit der es über ein Kabel 12 in Verbindung steht, so steuerbar, daß sich mit ihm für wenigstens einen Montageparameter gegebenenfalls bei jedem einzelnen Montagevorgang ein anderer Sollwert erzielen läßt; andererseits sind in das Werkzeug 10 in Fig. 1 nicht dargestellte Sensoren eingebaut, mit deren Hilfe der oder die jeweils interessierenden Montageparameter, hier das Festzieh-Drehmoment für die einzudrehenden Schrauben, gemessen werden können.

Diese Meßwerte werden als Istwerte von dem Werkzeug 10 ebenfalls über das Kabel 12 an die Kontrolleinheit 15 weitergeleitet, die für jeden einzelnen Montagevorgang die so gelieferten Istwerte mit den entsprechenden Sollwerten vergleicht und überprüft, ob etwaige Abweichungen innerhalb vorgebbarer Toleranzgrenzen liegen.

Da, wie oben angegeben, für die verschiedenen Montagestellen 6, 7, 8 und 9 die jeweils zu erreichenden Istwerte und/oder die für Abweichungen zulässigen Toleranzgrenzen voneinander verschieden sind, ist es erforderlich, daß die Kontrolleinheit 15 für jeden einzelnen Montagevorgang eine Information darüber erhält, an welcher Montagestelle 6, 7, 8 oder 9 er durchgeführt wird. Zu diesem Zweck ist jede der Montagestationen 2 und 4 mit einem Sender 18 ausgerüstet, der in einen auf die unmittelbare Umgebung des jeweiligen Werkstückes 5, an dem der Montagevorgang durchgeführt werden soll, begrenzten Raumbereich 19 hinein ein Signal aussendet, das eine die betreffende Montagestelle 6 oder 7 in eindeutiger Weise kennzeichnende Information enthält.

Um dieses Signal und die in ihm enthaltene Information empfangen zu können, besitzt das Werkzeug einen Empfänger 20, der so ausgebildet ist, daß er unabhängig von der jeweiligen momentanen Lage des Werkzeuges 10 das vom Sender 18 ausgesandte Signal mit Sicherheit immer dann empfangen kann, wenn das Montagewerkzeug 10 zur Durchführung des betreffenden Montagevorganges in die vom Sender 18 ausgehende "Informationsdusche" eintaucht.

Da in der Montagestation 3 an zwei Montagestellen 8 und 9 zwei verschiedene Montageaufgaben durchgeführt werden müssen, sind an dieser Montagestation 3 zwei Sender 18, 18' vorgesehen, von denen jeder ein anderes Signal in einen Raumbereich 19, 19' hinein abstrahlt, der gegen den Raumbereich 19', 19 des Nachbarsenders so abgeschirmt ist, daß der Empfänger 20 am Werkzeug 10 immer nur eines der beiden Signale empfängt, wenn er in den betreffenden Raumbereich 19, 19' eintaucht. Damit erhält die Kontrolleinheit 15 auch hier immer ein eindeutiges Identifizierungssignal, das angibt, ob ein Montagevorgang an der Montagestelle 8 oder an der Montagestelle 9 durchgeführt wird. Damit kann die Bedienungsperson auch die Montagevorgänge, die an der Montagestation 3 durchzuführen sind, in beliebiger Reihenfolge ausführen. Erfindungsgemäß kann die Anzahl der innerhalb einer Montagestation vorgesehenen Montagestellen, an denen Montagevorgänge in beliebiger Reihenfolge durchgeführt werden können, auch mehr als zwei betragen. Hierfür ist lediglich erforderlich, daß eine entsprechend große Anzahl von Sendern vorgesehen und an der Montagestation so angeordnet wird, daß sich die von den Sendern bestrahlten Raumbereiche nicht überschneiden und daß das Werkzeug 10 zumindest mit seinem Empfänger 20 mit Sicherheit in den zu jeder Montagestelle gehörenden Raumbereich eintaucht, wenn es von der Bedienungsperson an die betreffende Montagestelle herangeführt wird.

Das vom Empfänger 20 bei Annäherung des Werkzeuges 10 beim Eintauchen in einen der Raumbereiche 19, 19' empfangene Signal wird als Erkennungssignal ebenfalls über die Leitung 12 an die Kontrolleinheit 15 weitergeleitet. Die in dem Signal enthaltene Information wird entweder bereits im Werkzeug 10 oder in der Kontrolleinheit 15 dekodiert und von der Kontrolleinheit dazu verwendet, den oder die für die betreffende Montagestelle 6, 7, 8 oder 9 vorgegebenen Sollwerte und/oder Toleranzgrenzen aus einem Speicher abzurufen und zum Steuern des Werkzeugs sowie zum Vergleich mit den bei dem betreffenden Montagevorgang vom Werkzeug 10 gelieferten Istwerten zur Verfügung zu stellen.

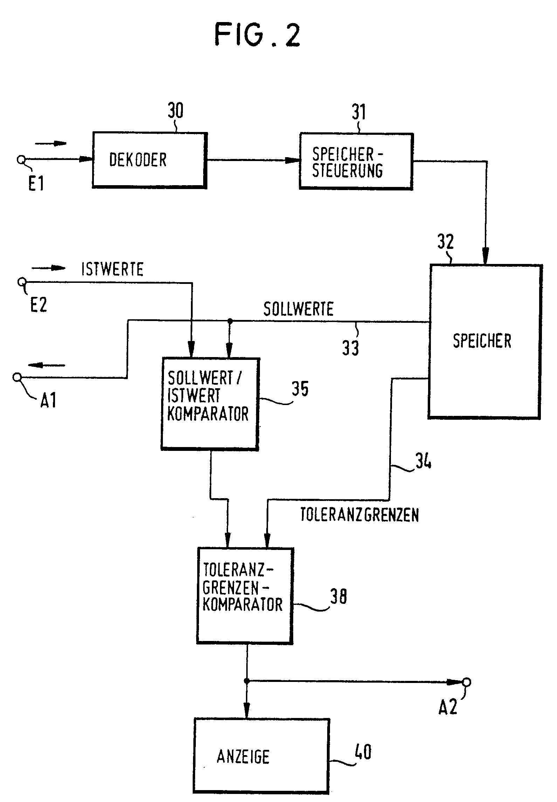

Zur Durchführung der eben geschilderten Vorgänge kann die Kontrolleinheit 15 z.B. die in Fig. 2 schematisch dargestellten ten Schaltungsanordnungen umfassen. Es wird davon ausgegangen, daß der Kontrolleinheit das Erkennungssignal über einen Eingang E 1 zugeführt wird. Von dort gelangt es an einen Dekoder 30, der die im Erkennungssignal enthaltene Information, die die momentane Einsatz-Montagestelle 6, 7, 8 oder 9 kennzeichnet, dekodiert und ein entsprechendes Informationssignal an eine Speichersteuerung 31 weitergibt, die daraufhin einen Speicher 32 so ansteuert, daß er den oder die für die betreffende Montagestelle erforderlichen Sollwerte auf seiner Sollwert-Ausgangsleitung 33 und die für die Beurteilung der Abweichungen der Istwerte von den Sollwerten erforderlichen Toleranzgrenzen-Werte auf seiner Toleranzgrenzen-Ausgangsleitung 34 zur Verfügung stellt.

Die Sollwert-Ausgangsleitung 33 des Speichers 32 ist einerseits mit einem Ausgang A1, der zum Werkzeug 10 führt, und andererseits mit dem einen Eingang eines Sollwert/Istwert-Komparators 35 verbunden, dessen anderem Eingang die vom Werkzeug 10 über den Eingang E 2 der Kontrolleinheit 15 kommenden Istwerte zugeführt werden. Das über den Ausgang A 1 abgegebene Sollwert-Signal dient dazu, das Werkzeug so zu steuern, daß beim nächsten Montagevorgang der oder die vorgegebenen Sollwerte erreicht werden können. Die Schaltungseinheiten, die gegebenenfalls zur Umsetzung des Sollwert-Signals in ein entsprechendes Steuersignal und/oder für eine Leistungsverstärkung benötigt werden, sind der Einfachheit halber in Fig. 2 nicht dargestellt. Sie können sowohl im Werkzeug 10 als auch in der Kontrolleinheit 15 oder auf beide verteilt angeordnet werden.

Der Sollwert/Istwert-Komparator 35 erzeugt an seinem Ausgang ein Differenzsignal, das die Größe der Abweichung der Istwerte von den vorgegebenen Sollwerten sowie das Vorzeichen dieser Abweichung wiedergibt. Dieses Differenzsignal wird dem einen Eingang eines Toleranzgrenzen-Komparators 38 zugeführt, dessen anderer Eingang mit der Toleranzgrenzen-Ausgangsleitung 34 des Speichers 32 verbunden ist.

Der Toleranzgrenzen-Komparator vergleicht das Differenzsignal mit den Toleranzgrenzen und erzeugt an seinem Ausgang ein "gut/nicht-gut"-Signal, das einerseits einer Anzeigeeinheit 40 und andererseits über einen Ausgang der Kontrolleinheit 15 einer weiteren Verarbeitung zugeführt wird. Diese weitere Verarbeitung kann z.B. darin bestehen, daß dann, wenn dieses Signal den Wert "nicht-gut" besitzt, das betreffende Werkstück 5 einer Nachbesserung zugeführt wird.

Da im Speicher 32 die Sollwerte und Toleranzgrenzen für alle an den verschiedenen Montagestellen 6, 7, 8, 9 durchzuführenden Montagevorgänge enthalten sind und jederzeit abgerufen werden können, stehen mit der geschilderten Anordnung jederzeit diefür einen speziellen Montagevorgang benötigten Werte zur Verfügung. Da das erfindungsgemäße Steuerungs- und Überwachungssystem automatisch die Einsatz-Montagestelle, d.h. also diejenige Montagestelle 6, 7, 8 oder 9, an der das Werkzeug 10 momentan zum Einsatz kommt, identifiziert, kann die Kontrolleinheit 15 immer die richtigen Sollwerte und Toleranzgrenzen auswählen, ohne daß die Bedienungsperson des Werkzeuges 10 diese Werte kennen und in das Steuerungs-Überwachungssystem eingeben muß. Einzige Voraussetzung für das einwandfreie Arbeiten dieses Steuerungs- und Überwachungssystems ist lediglich, daß an jeder der Montagestellen 6, 7, 8 oder 9 immer der gleiche Montagevorgang durchgeführt wird. Dabei kommt es nicht auf die exakte geomtrische Lage der Montagestelle am Werkstück 5, sondern lediglich darauf an, daß sich die Montagestelle innerhalb des vom zugehörigen Sender 18, 18' bestrahlten Raumbereiches 19, 19' befindet und daß die Montageparameter (Sollwerte und Toleranzgrenzen) an ein und derselben Montagestelle immer die gleichen sind.

Selbstverständlich ist die Anzahl der Montagestationen bzw. Montagestellen, an denen das erfindungsgemäße Steuerungs- und Überwachungssystem zum Einsatz kommen kann, nicht auf die in Fig. 1 dargestellte Anzahl beschränkt. Die Übertragung des Erkennungssignals und der gemessenen Istwerte vom "intelligenten" Werkzeug 10 zur Kontrolleinheit 15 kann statt über ein Kabel auch drahtlos erfolgen. Weiterhin können mehrere Kontrolleinheiten 15 von verschiedenen Werkzeugen 10 zu einer Kontrollzentrale zusammengefaßt werden, die einen für alle Werkzeuge gemeinsamen Speicher für die Sollwerte und Toleranzgrenzen aufweisen kann.

## Ansprüche

1. Steuerungs- und Überwachungsanordnung für ein Werkzeug (10), das so steuerbar ist, daß mit ihm bei nacheinander erfolgenden Montagevorgängen für wenigstens einen Montageparameter verschiedene Sollwerte erreichbar sind, und das Sensoren umfaßt, die dazu dienen, den bei einem durchgeführten Montagevorgang erzielten Istwert des wenigstens einen Montageparameters zu erfassen, mit einer Kontrolleinheit (15), die dem Werkzeug (10) den für einen durchzuführenden Montagevorgang gewünschten Sollwert für den wenigstens einen Montageparameter vorgibt und den vom Werkzeug (10) für einen durchgeführten Montagevorgang gemessenen Istwert empfängt und überprüft, ob der Istwert innerhalb vorgebbarer Toleranzgrenzen mit dem gewünschten Sollwert übereinstimmt, wobei in der Kontrolleinheit (15) für verschiedene Montageaufgaben verschiedene Sollwerte und/oder verschiedene Toleranzgrenzen gespeichert sind, dadurch **gekennzeichnet,** daß eine Erkennungseinrichtung (18, 18', 20) vorgesehen ist, die für jede Montagestelle (6, 7, 8, 9), an der eine Montageaufgabe durchzuführen ist, beim Eintritt des Werkzeuges (10) in den Raumbereich (19, 19') der Montagestelle (6, 7, 8, 9) ein die Montagestelle und/oder das Werkzeug (10) kennzeichnendes Erkennungssignal erzeugt, das zur Kontrolleinheit (15) übertragen wird und dort zur Auswahl des wenigstens einen für die betreffende Montageaufgabe gewünschten Sollwertes und/oder der zugehörigen Toleranzgrenzen dient.

2. Steuerungs- und Überwachungsanordnung nach Anspruch 1, dadurch **gekennzeichnet,** daß die Erkennungseinrichtung (18, 18', 20) für jede Montagestelle (6, 7, 8, 9) einen Sender (18, 18') und einen am Werkzeug (10) angebrachten Empfänger (20) umfaßt, und daß der Sender (18, 18') in den Raumbereich (19, 19') der zugehörigen Montagestelle (6, 7, 8, 9) hinein und auf diesen Raumbereich (19, 19') begrenzt ein Signal aussendet, das die Montagestelle (6, 7, 8, 9) kennzeichnet und das vom Empfänger (20) empfangen und an die Kontrolleinheit (15) weitergeleitet wird.

3. Steuerungs- und Überwachungsanordnung nach Anspruch 1, dadurch **gekennzeichnet,** daß die Erkennungseinrichtung für jede Montagestelle einen Detektor umfaßt, der ein in den Raumbereich der Montagestelle eintretendes Werkzeug identifiziert und ein das Werkzeug kennzeichnendes Signal an die Kontrolleinheit weiterleitet.

4. Steuerungs- und Überwachungsanordnung nach einem der Ansprüche 1 bis 3, dadurch **gekennzeichnet,** daß der wenigstens eine Montageparameter das Drehmoment ist, mit dem eine zu montierende Schraube oder Mutter festgezogen wird.

5. Steuerungs- und Überwachungsanordnung nach einem der Ansprüche 1 bis 4, dadurch **gekennzeichnet,** daß der wenigstens eine Montageparameter der Drehwinkel ist, um den eine Schraube oder Mutter bei der Montage verdreht wird.

6. Steuerungs- und Überwachungsanordnung nach einem der Ansprüche 2 bis 5, dadurch **gekennzeichnet,** daß das vom Sender (18) ausgesandte Signal ein Trägersignal ist, auf das ein die Montagestelle (6, 7, 8, 9) kennzeichnendes Signal aufmoduliert ist, und daß dem Empfänger (20) ein das Erkennungssignal erzeugender Demodulator nachgeschaltet ist.

7. Steuerungs- und Überwachungsanordnung nach Anspruch 6, dadurch **gekennzeichnet,** daß das Trägersignal ein Infrarotsignal ist.

8. Steuerungs- und Überwachungsanordnung nach Anspruch 6, dadurch **gekennzeichnet,** daß das Trägersignal ein Ultraschallsignal ist.

9. Steuerungs- und Überwachungsanordnung nach einem der Ansprüche 1 bis 8, dadurch **gekennzeichnet,** daß die Istwerte und/oder das Erkennungssignal drahtlos an die Kontrolleinheit (15) übermittelt werden.

10. Steuerungs- und Überwachungsanordnung nach einem der vorhergehenden Ansprüche, dadurch **gekennzeichnet,** daß die Kontrolleinheiten mehrerer Werkzeuge (10) zu einer Kontrollzentrale zusammengefaßt sind, die die Erkennungssignale und Istwerte von den Werkzeugen empfängt und auswertet.

## Claims

1. A control and monitoring arrangement for a tool (10) which can be controlled in such a way that various reference values can be achieved therewith, in successive assembly operations, in respect of at least one assembly parameter, and which includes sensors which serve to detect the actual value, which is attained in an assembly operation which has been carried out, in respect of the at least one assembly parameter, comprising a control unit (15) which presets for the tool (10) the reference value which is desired for an assembly operation to be carried out, in respect of the at least one assembly parameter, and which receives the actual value as measured by the tool (10) for an assembly operation which has been carried out, and checks whether the actual value coincides with the desired reference value within presettable tolerance limits, wherein various reference values and/or various tolerance limits are stored in the control unit (15) for various assembly tasks, characterised in that there is provided a recognition means (18, 18', 20) which for each assembly location (6, 7, 8, 9) at which an assembly task is to be carried out, generates a recognition signal for identifying the assembly location and/or the tool (10), when the tool (10) moves into the area of the assembly location (6, 7, 8, 9), the recognition signal being transmitted to the control unit (15) and there serving to select the at least one reference value which is desired for the respective assembly task in question and/or the associated tolerance limits.

2. A control and monitoring arangement according to claim 1 characterised in that for each assembly location (6, 7, 8, 9), the recognition means (18, 18', 20) has a transmitter (18, 18') and a receiver (20) which is disposed at the tool (10), and that the transmitter (18, 18') emits into the spatial area (19, 19') of the associated assembly location (6, 7, 8, 9) and limited to said spatial area (19, 19') a signal which identifies the assembly location (6, 7, 8, 9) and which is received by the receiver (20) and passed on to the control unit (15).

3. A control and monitoring arrangement according to claim 1 characterised in that for each assembly location the recognition means includes a detector which identifies a tool passing into the spatial area of the assembly location, and passes on a signal identifying the tool, to the control unit.

4. A control and monitoring arrangement according to one of claims 1 to 3 characterised in that the at least one assembly parameter is the torque with which a nut or screw to be assembled is tightened.

5. A control and monitoring arrangement according to one of claims 1 to 4 characterised in that the at least one assembly parameter is the angle of rotation through which a screw or nut is turned in the assembly process.

6. A control and monitoring arrangement according to one of claims 2 to 5 characterised in that the signal emitted by the transmitter (18) is a carrier signal on to which a signal identifying the assembly location (6, 7, 8, 9) is modulated, and that disposed on the output side of the receiver (20) is a demodulator for producing the recognition signal.

7. A control and monitoring arrangement according to claim 6 characterised in that the carrier signal is an infra-red signal.

8. A control and monitoring arrangement according to claim 6, characterised in that the carrier signal is an ultra-sound signal.

9. A control and monitoring arrangement according to one of claims 1 to 8 characterised in that the actual values and/or the recognition signal are transmitted to the control unit (15) in a wireless mode.

10. A control and monitoring arrangement according to one of the preceding claims characterised in that the control units of a plurality of tools (10) are combined together to provide a central control station which receives and evaluates the recognition signals and actual values from the tools.

## Revendications

1. Dispositif de commande et de contrôle pour un outil (10) qui est susceptible d'être commandé de telle façon que, pour des processus de montage qui se succèdent, l'on puisse atteindre avec lui différentes valeurs de consigne pour au moins un paramètre de montage, et qui comporte des capteurs qui servent à déterminer la valeur réelle d'au moins ledit paramètre de montage, atteinte au cours d'un processus de montage préalable, le dispositif étant muni d'une unité de contrôle (15) qui prescrit à l'outil (10) la valeur de consigne souhaitée pour au moins ledit paramètre de montage d'un processus de montage à mettre en oeuvre et reçoit de l'outil (10) la valeur réelle mesurée pour un processus de montage préalable, et contrôle si la valeur réelle est à l'intérieur de limites de tolérance prédéterminables, par rapport à la valeur de consigne souhaitée, différentes valeurs de consigne et/ou différentes limites de tolérance étant mises en mémoire dans l'unité de contrôle (15) pour différentes opérations de montage, caractérisé en ce qu'il est prévu un organe de reconnaissance (18, 18', 20) qui, pour chaque emplacement de montage (6, 7, 8, 9) où une opération de montage est à mettre en oevre, émet à l'entrée de cet outil (10) dans la zone spatiale (19, 19') de l'emplacement de montage un signal de reconnaissance caractérisant l'emplacement de montage (6, 7, 8, 9) et/ou l'outil (10), ce signal de reconnaissance étant transmis à l'unité de contrôle (15) où il sert à la sélection d'au moins une desdites valeurs de consigne souhaitées et/ou de limites de tolérance qui s'y rapportent, pour l'opération de montage en cause.

2. Dispositif de comande et de contrôle selon la revendication 1, caractérisé en ce que l'organe de reconnaissance (18, 18', 20) comporte, pour chaque emplacement de montage (6, 7, 8, 9), un émetteur (18, 18') et un récepteur (20) attaché à l'outil (10), et en ce que l'émetteur (18, 18') émet, à l'intérieur de la zone spatiale (19, 19') de l'emplacement de montage correspondant (6, 7, 8, 9) et limité à cette zone spatiale (19, 19'), un signal qui caractérisé l'emplacement de montage (6, 7, 8, 9) et qui est reçu par le récepteur (20) et est ensuite transmis à l'unité de contrôle (15).

3. Dispositif de commande et de contrôle selon la revendication 1, caractérisé en ce que l'organe de reconnaissance comporte, pour chaque emplacement de montage, un détecteur qui identifie un outil entrant dans la zone spatiale de l'emplacement de montage et transmet à l'unité de contrôle un signal caractérisant l'outil.

4. Dispositif de commande et de contrôle selon l'une des revendications 1 à 3, caractérisé en ce que le couple avec lequel est serré une vis ou un écrou à monter constitue au moins ledit paramètre de montage.

5. Dispositif de commande et de contrôle selon l'une des revendications 1 à 4, caractérisé en ce que l'angle de rotation dont on fait tourner au cours du montage une vis ou un écrou constitue au moins ledit paramètre de montage.

6. Dispositiv de commande et de contrôle selon l'une des revendications 2 à 5, caractérisé en ce que le signal émis par l'émetteur (18) est un signal porteur sur lequel est modulé un signal caractérisant l'emplacement de montage (6, 7, 8, 9) et en ce qu'en aval du récepteur (20) est branché un démodulateur émettant le signal de reconnaissance.

7. Dispositiv de commande et de contrôle selon la revendication 6, caractérisé en ce que le signal porteur est un signal infrarouge.

8. Dispositiv de commande et de contrôle selon la revendication 6, caractérisé en ce que le signal porteur est un signal ultrasonore.

9. Dispositif de commande et de contrôle selon l'une des revendications 1 à 8, caractérisé en ce que les valeurs réelles et/ou le signal de reconnaissance sont transmis sans liaison de fil à l'unité de contrôle (15).

10. Dispositif de commande et de contrôle selon l'une des revendications précédentes, caractérisé en ce que les unités de contrôle de plusieurs outils (10) sont assemblées à une centrale de contrôle qui reçoit et evalue les signaux de reconnaissance et les valeurs réelles des outils.

# FIG .1

KONTROLLEINHEIT

# FIG. 2